(19) Europäisches Patentamt
European Patent Office
Office européen des brevets

(11) **EP 3 815 525 A1**

(12) **EUROPEAN PATENT APPLICATION**
published in accordance with Art. 153(4) EPC

(43) Date of publication:
**05.05.2021 Bulletin 2021/18**

(21) Application number: **19825974.9**

(22) Date of filing: **28.06.2019**

(51) Int Cl.:
*A01K 63/04* [(2006.01)]       *A01K 61/10* [(2017.01)]
*C02F 3/04* [(2006.01)]

(86) International application number:
**PCT/JP2019/025878**

(87) International publication number:
**WO 2020/004635 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2018   JP 2018123959**

(71) Applicant: **Mitsubishi Chemical Corporation**
**Chiyoda-ku**
**Tokyo 100-8251 (JP)**

(72) Inventors:
• **KAWASAKI, Tetsuya**
  **Tokyo 100-8251 (JP)**
• **LAI, Chueh-Kuang**
  **Pingtung County, 940 (TW)**

(74) Representative: **Hoffmann Eitle**
**Patent- und Rechtsanwälte PartmbB**
**Arabellastraße 30**
**81925 München (DE)**

(54) **WATER PURIFICATION DEVICE, AQUACULTURE WATER PURIFICATION SYSTEM, WATER PURIFICATION METHOD, AND PRODUCTION METHOD FOR AQUATIC ORGANISM**

(57)    Provided is a water purification device including: at least one base material carrying denitrifying bacteria; a holding part which holds the base material; a water sprinkling mechanism which sprinkles water to be treated onto the base material; and a water drainage mechanism which is arranged on the holding part and drains the water to be treated such that at least a portion of the base material is constantly unexposed to the water to be treated.

FIG. 2

**Description**

TECHNICAL FIELD

The present invention relates to a water purification device, an aquaculture water purification system, a water purification method, and a production method for aquatic organism.

BACKGROUND ART

In the culturing of aquatic organisms such as fish, it is important firstly to grow the aquatic organisms being cultured as fast as possible, and then to inhibit the conversion of nitrogen contents generated from excreta of the fish being cultured, residual feed and the like into ammonia and thereby prevent the nitrogen contents from causing harm to the fish and the like. Ammonia nitrogen is known to have a very high fish toxicity. Accordingly, nitrification reaction which oxidizes ammonia nitrogen into nitrate nitrogen having a relatively low fish toxicity by the action of microorganisms has been utilized. Although nitrate nitrogen is less toxic than ammonia, there is little doubt that it is still harmful, and it is thus desirable to further reduce nitrate nitrogen into nitrogen. The reaction of reducing nitrate nitrogen into nitrogen (denitrification) normally proceeds in an anaerobic environment. In the culturing of aquatic organisms, it is necessary to maintain a water tank system in an aerobic environment for the growth of the aquatic organisms, and the reduction reaction of nitrate nitrogen, which proceeds in an anaerobic environment, is thus not performed at ordinary aquaculture farms. Therefore, for the removal of nitrate nitrogen, it is necessary to replace water of the culturing water tanks and the like within short periods by a method of, for example, taking fresh water into the water tanks and the like from a river or other source.

However, such water replacement is premised on the use of a large amount of water, and it is difficult to replace a large amount of water when carrying out aquaculture in, for example, an inland area where there is no ocean or river nearby. In addition, the water replacement means that a large amount of wastewater is generated, and it is not preferable to discharge all of nitrogen compounds such as ammonia, nitrous acid and nitric acid, which are generated during aquaculture as wastewater, into rivers and oceans since this causes eutrophication of rivers and the like. Further, the effluent standards have become increasingly stringent in recent years from the standpoint of environmental protection.

In order to solve the above-described problems, a two-step reaction performed by microorganisms is utilized to remove ammonia produced by fish and the like from the wastewater. In other words, a method which utilizes a combination of a reaction for converting ammonia into nitric acid (nitrification) and a reaction for decomposing nitric acid into nitrogen (denitrification) is employed. Once ammonia is decomposed to nitrogen, it can be released into the atmosphere without imposing a burden on the environment.

These reactions that use living organisms, particularly the latter reaction for decomposing nitric acid into nitrogen, have been utilized under anaerobic conditions for bacteria, based on the assumption that anaerobic bacteria are used.

In Patent Document 1, cellulose or the like is used as a base material for denitrification reaction. The principle thereof is described as "Natural-occurring polymers and biodegradable polymers such as biodegradable resins serve as substrates or hydrogen donors for the growth and proliferation of heterotrophic (organotrophic) bacteria, and denitrifying bacteria, which are facultative anaerobic bacteria that reduce and remove nitrogen oxides by utilizing oxygen in the nitrogen oxides for respiration in the presence of oxides of nitrogen such as nitrite and nitrate under circumstances where dissolved oxygen in water is extremely low, are clustered and implanted on the biodegradable polymers.

Further, Patent Documents 2 and 3 disclose technologies in which biodegradable resins are exemplified as base materials other than cellulose that can be used for denitrification reaction.

Meanwhile, as a device which performs a denitrification reaction utilizing an aerobic condition. Patent Document 4 discloses a structure in which a filter medium containing a biodegradable plastic is arranged in water channels of a filtration device, and the upper side of the filter medium is in contact with the air. In this technology, the biodegradable plastic is contained inside the filter medium and aerobic bacteria exist on the outer periphery of the filter medium, therefore, the biodegradable plastic itself where denitrification is performed is placed under an anaerobic condition.

PRIOR ART DOCUMENTS

PATENT DOCUMENTS

Patent Document 1: Japanese Unexamined Patent Application Publication No. H10-85782
Patent Document 2: Japanese Unexamined Patent Application Publication No. 2014-24000
Patent Document 3: Japanese Unexamined Patent Application Publication No. 2010-88307

Patent Document 4: Japanese Unexamined Patent Application Publication No. 2006-149221

SUMMARY OF THE INVENTION

PROBLEMS TO BE SOLVED BY THE INVENTION

However, in the treatments described in the above-mentioned Patent Documents, the removal rate of nitric acid is not fast enough, and the nitric acid concentration gradually increases in some cases. Consequently, the aquatic organisms and the like being cultured are adversely affected, resulting in deterioration of the feed conversion rate. A low feed conversion rate understandably causes a problem of an increase in the feed cost required for rearing aquatic organisms to a marketable size. Therefore, there is a demand for a water purification device which has a higher denitrification efficiency and can improve the feed conversion rate.

An object of the present invention is to solve the above-described problems and to provide a water purification device which not only efficiently removes nitric acid contained in water to be treated but also, in the purification of an aquaculture water as the water to be treated, can improve the feed conversion rate of aquatic organisms to be cultured and thereby reduce the feed cost. Another object of the present invention is to provide an aquatic organism production method in which the feed conversion rate of aquatic organisms is extremely high.

MEANS FOR SOLVING THE PROBLEMS

The present inventors intensively studied to solve the above-described problems and consequently discovered that the denitrification capacity is increased by rather exposing the denitrification reaction, which is conventionally carried out under anaerobic conditions in many cases, to the atmosphere, thereby arriving at the present invention. The present invention encompasses the following aspects.

(1) A water purification device, including
at least one base material carrying denitrifying bacteria;
a holding part which holds the base material;
a water sprinkling mechanism which sprinkles water to be treated onto the base material; and
a water drainage mechanism which is arranged on the holding part and drains the water to be treated such that at least a portion of the base material is constantly unexposed to the water to be treated.
(2) The water purification device according to (1), wherein the water to be treated is an aquaculture water.
(3) The water purification device according to (1) or (2), wherein the water drainage mechanism is a mechanism which drains the water to be treated without allowing the water to be retained.
(4) The water purification device according to any one of (1) to (3), wherein the base material contains a biodegradable plastic.
(5) The water purification device according to (4), wherein the biodegradable plastic contains a dicarboxylic acid-derived constituent unit.
(6) The water purification device according to (5), wherein the biodegradable plastic contains two or more kinds of dicarboxylic acid-derived constituent units.
(7) The water purification device according to any one of (4) to (6), wherein
the base material is a three-dimensional mesh-form article in which thermoplastic resin-containing wires are not only bent and intertwined but also combined by being fused together at their points of contact, and
the wires contain the biodegradable plastic.
(8) The water purification device according to any one of (1) to (7), wherein the holding part includes a hole which allows the water to be treated that has been sprinkled onto the base material to be discharged from the holding part.
(9) The water purification device according to any one of (1) to (8), wherein the water purification device is detachably equipped with the holding part.
(10) The water purification device according to (9), wherein the water purification device has a plurality of the holding part.
(11) The water purification device according to any one of (1) to (10), wherein the holding part holds the base material by a mesh structure.
(12) An aquaculture water purification system which purifies an aquaculture water extracted from an aquaculture pond in which an aquatic organism is cultured, and supplies the thus purified aquaculture water back to the aquaculture pond,
wherein the aquaculture water purification system includes
a biofiltration bed which converts ammonia contained in the aquaculture water extracted from the aquaculture pond into nitric acid; and
the water purification device according to any one of (1) to (11) which removes nitric acid from the aquaculture water discharged from the biofiltration bed.

(13) A water purification method, including a denitrification step of removing nitric acid from water to be treated, wherein the denitrification step includes a step of sprinkling water to be treated onto a base material carrying denitrifying bacteria, and a step of draining the water to be treated such that at least a portion of the base material is constantly unexposed to the water to be treated.

(14) The water purification method according to (13), wherein the base material contains a biodegradable plastic containing two or more kinds of dicarboxylic acid-derived constituent units.

(15) A production method for aquatic organism using the water purification method according to (13) or (14), wherein the water to be treated is an aquaculture water of an aquatic organism.

(16) The production method for aquatic organism according to (15), wherein the aquatic organism is eel.

EFFECTS OF THE INVENTION

According to the present invention, a water purification device which can efficiently perform denitrification, as well as a purification device which can reduce the nitric acid concentration in water to be treated can be provided.

The objects and effects of the present invention are not limited to the ones that are specifically described above, and include those that are made apparent to a person of ordinary skill in the art by the entirety of the present specification.

BRIEF DESCRIPTION OF THE DRAWINGS

FIG. 1 illustrates one example of a preferred mode of an aquaculture water purification system according to a second embodiment of the present invention.
FIG. 2 illustrates an outline of the sprinkle-type aquaculture water purification device used in Examples.
FIG. 3 illustrates an outline of the sedimentation-type aquaculture water purification device used in Comparative Example.

MODE FOR CARRYING OUT THE INVENTION

The present invention will now be described in detail, however, the following descriptions of the requirements are merely examples (representative examples) of the embodiments of the present invention, and the present invention is not limited to the contents thereof, and can be carried out with various modifications within the scope of the gist of present invention.

A water purification device according to a first embodiment of the present invention includes: at least one base material carrying denitrifying bacteria; a holding part which holds the base material; a water sprinkling mechanism which sprinkles water to be treated onto the base material; and a water drainage mechanism which is arranged on the holding part and drains the water to be treated such that at least a portion of the base material is constantly unexposed to the water to be treated. The water to be treated is not particularly restricted and may be, for example, an aquaculture water, i.e., the water purification device may be an aquaculture water purification device. The water purification device according to the present embodiment will now be described in detail using one mode thereof, which is an aquaculture water purification device, as an example.

1. Aquaculture Water Purification Device

The aquaculture water purification device according to the present embodiment includes: at least one base material carrying denitrifying bacteria; a holding part which holds the base material; a water sprinkling mechanism which sprinkles an aquaculture water onto the base material; and a water drainage mechanism which is arranged on the holding part and drains the aquaculture water such that at least a portion of the base material is constantly unexposed to the aquaculture water. If necessary, the aquaculture water purification device according to the present embodiment may further include a component(s) other than the above-described ones as appropriate.

1-1. Base Material Supporting Denitrifying Bacteria

The base material used in the aquaculture water purification device carries denitrifying bacteria that convert nitric acid into nitrogen, and provides a reducing power for denitrification. This nitric acid may be, for example, one which is converted from ammonia by nitrifying bacteria. It is not necessary that all of the packed base material carry the denitrifying bacteria, and the denitrifying bacterial may be carried on the base material to such an extent that nitric acid contained in the water to be treated can be sufficiently converted into nitrogen in accordance with the application.

As the denitrifying bacteria for the conversion of nitric acid into nitrogen, any known bacteria having such a function can be used as appropriate.

In the present embodiment, from the standpoint of providing the denitrifying bacterial with an organic matter as a substrate or a hydrogen donor, the base material preferably contains a biodegradable plastic.

As the biodegradable plastic, PLA (polylactic acid)-based, PBS (polybutylene succinate)-based, PCL (polycaprolactone)-based, and PHB (polyhydroxybutyrate)-based biodegradable plastics are generally known. Thereamong, the biodegradable plastic is preferably a PBS (polybutylene succinate)-based or PCL (polycaprolactone)-based synthetic biodegradable plastic that contains a dicarboxylic acid-derived constituent unit, most preferably a PBS-based biodegradable plastic that contains a dicarboxylic acid-derived constituent unit. The term "PBS-based biodegradable plastic" used herein refers to a biodegradable plastic having a butylene succinate unit as a repeating unit constituting the polymer, and the molar ratio of the butylene succinate unit with respect to all repeating units constituting the polymer is preferably 0.3 or higher, more preferably 0.5 or higher.

Specific examples of a preferred biodegradable plastic include a polycaprolactone, a poly(caprolactone/butylene succinate), a polybutylene succinate, a poly(butylene succinate/adipate), a poly(butylene succinate/carbonate), and a (polylactic acid/polybutylene succinate) block copolymer. Thereamong, one which contains succinic acid as a monomer component is preferably used.

In addition, a poly(butylene succinate/adipate) (PBSA) which contains two kinds of dicarboxylic acid-derived constituent units is preferred because it is highly biodegradable and can provide an adequate reducing power (energy) in a controlled-release manner for denitrification. Further, a PBSA is preferred not only because it can be relatively easily biodegraded in an aerobic environment in contrast to that other biodegradable plastics, such as PHB-based biodegradable plastics, are biodegraded in both aerobic and anaerobic environments, but also because it can serve as a substrate or a hydrogen donor for the growth and proliferation of the denitrifying bacteria.

The shape of the base material is not particularly restricted, and the base material may have any shape, such as a pellet shape, a bulk shape (e.g., a rectangular shape, a spherical shape, or a three-dimensional mesh shape), a flake shape, a particle shape, or a fibrous shape. Considering the ease of filling the base material, the base material preferably has a flake shape, a particle shape, a fibrous shape or the like. When the holding part holds the base material by a mesh structure, from the standpoints of inhibiting the loss of the base material due to passage through the mesh and thereby improving the working efficiency, the base material preferably has a pellet shape, a bulk shape or the like, although this depends on the mesh size. Meanwhile, when the base material contains a biodegradable plastic, the base material may be, for example, a three-dimensional mesh-form article in which thermoplastic resin-containing wires are not only bent and intertwined but also combined by fusing together at their points of contact, and the wires may take a mode of containing a biodegradable plastic. Such a three-dimensional mesh-form article can be obtained by, for example, the following method. That is, when a molten biodegradable resin (thermoplastic resin) such as PBSA is extruded from an extruder die in the form of plural wires, the extruded wires are bent into a loop shape due to a curving force acting thereon. Further, the plural wires bent into a loop shape are intertwined and thermally adhered with each other at their points of contact, therefore, by solidifying the wires with cooling through a water tank while sandwiching the wires between rolls to maintain a constant thickness, a three-dimensional mesh-form article in which the wires are three-dimensionally and randomly intertwined together can be obtained.

1-2. Holding Part

The holding part is not particularly restricted as long as it can hold the above-described base material. The holding part holds the base material in such a manner that the base material is not completely immersed in the aquaculture water and at least a portion thereof is constantly unexposed to the aquaculture water by means of, for example, a water drainage mechanism. The holding part holds the base material in a state where at least a portion of the base material is exposed to the air, whereby the base material can be maintained in an aerobic environment. The term "exposed" used herein encompasses a state where the surface of the base material is wetted, as long as the base material is exposed to the air and not completely immersed in the aquaculture water.

Further, even when the holding part is not in direct contact with the base material, the holding part encompasses the same mode as the mode of holding the base material. For example, the holding part includes a component that surrounds the base material.

The term "aerobic environment" used herein does not mean an aerobic environment for microorganisms, but means an aerobic environment for aquatic organisms (mainly fishes). Specifically, in the aerobic environment, the dissolved oxygen concentration (DO) in water may be 5 mg/L or higher, 6 mg/L or higher, 7 mg/L or higher, 8 mg/L or higher, 9 mg/L or higher, or 10 mg/L or higher.

The holding part preferably has a hole which allows the aquaculture water sprinkled onto the base material to be discharged from the holding part. This is because, by allowing the aquaculture water to be discharged from the holding part, the base material is prevented from being completely immersed in the aquaculture water and at least a portion of the base material is kept unexposed to the water to be treated, which makes it easy to maintain the base material in an aerobic environment. The hole is not particularly restricted as long as the aquaculture water in the holding part can be discharged therethrough, and the shape, the size, the number, the position and the like of the hole can be selected as appropriate in accordance with, for example, the quality of the aquaculture water and the type of the base material. Further, the hole may be an opening of the mesh structure described below and, when the aquaculture water purification device is provided with a plurality of the holding parts, the hole can also function as a mechanism which sprinkles water onto the base material arranged on the downstream side. In the case of the holding part arranged on the most downstream side of the aquaculture water purification device, the hole can double as a water drainage mechanism of the aquaculture water purification device.

The holding part is preferably installed in the aquaculture water purification device in a detachable manner. This is because, when the holding part is detached from the aquaculture water purification device, the base material is also removed from the aquaculture water purification device, so that deterioration and reduction of the base material can be more easily check by visual observation and various measurements. In addition, in cases where deterioration or reduction of the base material is confirmed, the base material can be removed from the aquaculture water purification device along with the holding part, and a holding part that holds fresh base material can be installed.

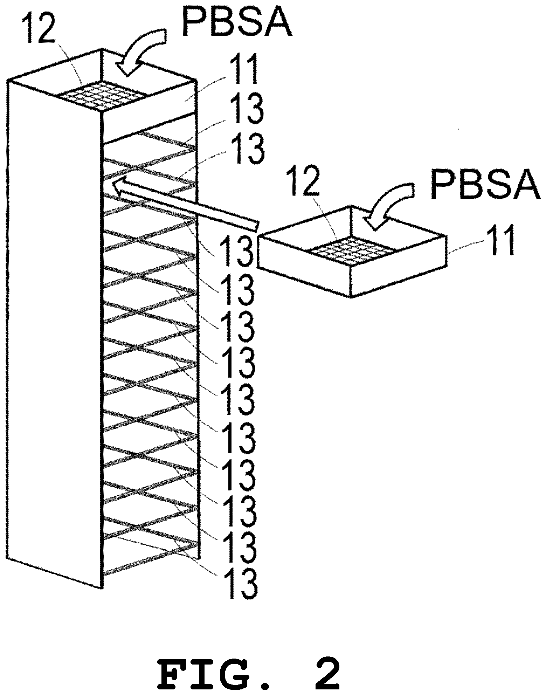

Examples of a mode of the aquaculture water purification device having such a detachable holding part include one in which, as illustrated in FIG. 2, holding parts 11 in the form of rectangular boxes, each of which has an opening surface on the side sprinkled with an aquaculture water, are installed in the aquaculture water purification device along guide rails 13 in a detachable manner.

When the water purification device is detachably equipped with the holding part as described above, the water purification device preferably has a plurality of the holding part. This is because, in the event of a reduction in the amount of the base material, a reduction in the denitrification capacity or the like in some of the holding parts, a reduction in the denitrification capacity of the aquaculture water purification device can be inhibited by removing only such holding parts from the aquaculture water purification device and installing holding parts that hold fresh base material.

The plural holding parts may be arranged in parallel to each other, or in series. For example, in the aquaculture water purification device used in the below-described Examples, plural holding parts 11 are arranged in series as illustrated in FIG. 2. In this case, a new holding part is preferably installed on the downstream side of a holding part that has not been replaced. By this, even if nitric acid that has not been completely denitrified remains in the aquaculture water passing through the base material contained in a holding part on the upstream side, the denitrifying bacteria freshly supplied to the downstream side can perform denitrification to improve the denitrification effect of the aquaculture water purification device.

Moreover, when plural holding parts are provided, the number thereof is not particularly restricted, and may be set as appropriate in accordance with the base material to be used, the nitric acid concentration of the aquaculture water, and the like. For example, it is preferred to use about 2 to 20 holding parts.

The above-described holding part preferably holds the base material by a mesh structure. For example, in cases where a plurality of the holding parts are connected in series, the aquaculture water is divided into droplets by the mesh structure when passing through a holding part on the upstream side, and sprinkled onto the base material positioned on the downstream side. In other words, the mesh structure can also function as the below-described water sprinkling mechanism. In addition, with regard to the holding part that is arranged on the most downstream side, the mesh structure can also function as a water drainage mechanism which drains the aquaculture water from the aquaculture water purification device.

The material, the wire diameter, the mesh size, the texture and the like of the mesh structure are not particularly restricted, and can be selected as appropriate in accordance with, for example, the quality of the aquaculture water and the size of the base material. Since the aquaculture water containing nitric acid may pass through the mesh structure, the mesh structure is preferably a titanium wire net, a fluorine resin net or the like that is highly resistant to nitric acid.

1-3. Water Sprinkling Mechanism

The water sprinkling mechanism is a mechanism for sprinkling an aquaculture water onto the base material while maintaining the base material carrying denitrifying bacteria in an aerobic environment. The base material, during sprinkling, is exposed to droplets of the aquaculture water as well as to the atmosphere, therefore, an aerobic environment can be maintained.

The water sprinkling mechanism is not particularly restricted in terms of the size of droplets, the sprinkling direction and the like, as long as it is capable of sprinkling droplets of the aquaculture water onto the base material. Specific examples of the water sprinkling mechanism include the above-described mesh structure of the holding part, a shower, and a mist spray. The water sprinkling mechanism is preferably a shower since it can uniformly sprinkle the aquaculture water onto the base material. Further, from the standpoint of reducing the energy consumption, it is preferred that the aquaculture water be sprinkled in the direction of gravity.

1-4. Water Drainage Mechanism

The water drainage mechanism is a mechanism which is arranged on the holding part and drains the aquaculture water such that at least a portion of the base material is constantly unexposed to the aquaculture water. Examples of a mode of the water drainage mechanism include one which drains the aquaculture water sprinkled onto the base material by the above-described water sprinkling mechanism such that the aquaculture water is not retained in the aquaculture water purification device. When the inside of the aquaculture water purification device, particularly the inside of the holding part, is filled with the aquaculture water, the base material carrying the denitrifying bacteria is immersed in the aquaculture water, and an aerobic environment can no longer be maintained, therefore, it is necessary to drain the sprinkled aquaculture water. The phrase "drains ... such that the aquaculture water is not retained ..." used herein does not mean that absolutely no aquaculture water remains in the water purification device, but means that the aquaculture water is drained to such an extent that allows the base material carrying the denitrifying bacteria to maintain an aerobic environment. For example, the ratio of the surface area of the base material immersed in the aquaculture water with respect to the total surface area of the base material is preferably 20% or less, more preferably 15% or less, still more preferably 10% or less, and it is particularly preferred that the surface of the base material be not immersed in the aquaculture water at all. The ratio of the surface area that is in contact with the aquaculture water with respect to the total surface area of the base material can be adjusted by, for example, modifying the opening ratio attributed to the hole, or using a drain valve or the like.

The water drainage mechanism is not particularly restricted as long as it is capable of draining the aquaculture water, which has been sprinkled onto the base material, at a rate that does not cause the aquaculture water to remain in the aquaculture water purification device, and the water drainage mechanism may be, for example, the mesh structure or the hole of the above-described holding part, a drain outlet, or a drain pipe.

In such a sprinkle-type aquaculture water purification device, the base material carrying the denitrifying bacteria is placed in an aerobic environment, therefore, particularly when a biodegradable plastic is used as the base material, biodegradation of the biodegradable plastic promptly proceeds to yield a substrate or an organic matter, namely a nutrient source of the denitrifying bacteria, so that the denitrification capacity is improved. This enables to effectively remove nitric acid harmful to aquatic organisms from the aquaculture water, as a result of which the feed conversion rate of aquatic organisms can be improved.

The term "feed conversion rate" used herein refers to the weight of the feed required for increasing the body weight of an aquatic organism by 1 kg, and is calculated by the following equation:

$$\texttt{Feed conversion rate = Weight of given feed/Increase in}$$

$$\texttt{body weight of aquatic organism}$$

A smaller value of the feed conversion rate means that the feed was more efficiently used for increasing the body weight of the aquatic organism.

The feed conversion rate varies depending on the type of the aquatic organism, the water temperature, and the like. For example, the feed conversion rate of eel is usually 1.8 to 2.0. Generally speaking, the feed conversion rate is lower (i.e., the value is larger) in the wintertime than in the summertime.

2. Aquaculture Water Purification System

An aquaculture water purification system according to a second embodiment of the present invention is an aquaculture water purification system which purifies an aquaculture water extracted from an aquaculture pond in which an aquatic organism is cultured, and supplies the aquaculture water back to the aquaculture pond. This aquaculture water purification system includes a biofiltration bed which converts ammonia contained in the aquaculture water extracted from the aquaculture pond into nitric acid, and the above-described aquaculture water purification device which removes nitric acid from the aquaculture water discharged from the biofiltration bed.

2-1. Biofiltration Bed

The biofiltration bed includes a calcium base material and a biodegradable resin base material.

The calcium base material is a base material on which bacteria for converting ammonia contained in the aquaculture water transferred from the aquaculture pond into nitric acid. As the bacteria for converting ammonia into nitric acid, any known bacteria having such a function can be used as appropriate. It is noted here that the calcium base material also functions to prevent the pH of the aquaculture water from being biased toward the acidic side due to the effect of nitric acid produced by nitrifying bacteria.

The calcium base material is not particularly restricted as long as it is a calcium-containing base material, however, from the standpoint of waste utilization and application, it is preferred to use shells, coral sand, or the like.

In the case of using shells or the like as the calcium base material, the shells or the like may be directly arranged on the biofiltration bed, or arranged after being coarsely or finely ground. When calcium carbonate or the like is separately added to the aquaculture water to adjust the pH of the aquaculture water, it is not necessary to use a calcium base material in the biofiltration bed, and a microbial carrier for water treatment that is made of a resin or the like may be used as well.

2-2. Preferred Mode

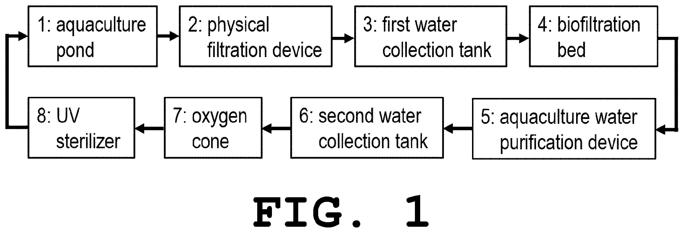

One example of a preferred mode of the aquaculture water purification system of the present invention will now be described referring to FIG. 1.

The aquaculture water purification system illustrated in FIG. 1 includes: an aquaculture pond 1; a physical filtration device 2; a first water collection tank 3; a biofiltration bed 4; an aquaculture water purification device 5; a second water collection tank 6; an oxygen cone 7; and a UV sterilizer 8.

In this aquaculture water purification system, first, an aquaculture water is transferred from the aquaculture pond 1 to the physical filtration device 2, and solid matters contained in the aquaculture water, such as feed and feces, are removed in the physical filtration device 2. The thus physically filtered aquaculture water is temporarily stored in the first water collection tank 3. Subsequently, the aquaculture water is transferred to the biofiltration bed 4, and ammonia contained in the aquaculture water is converted into nitric acid by nitrifying bacteria carried on the biofiltration bed 4. The aquaculture water discharged from the biofiltration bed 4 is sprinkled onto the base material of the aquaculture water purification device 5 of the present invention, and nitric acid contained in the aquaculture water is converted into nitrogen gas by denitrifying bacteria carried on the base material and thereby removed. The aquaculture water from which nitric acid has been removed in this manner is transferred to the second water collection tank 6. Thereafter, oxygen is blown into the aquaculture water by the oxygen cone 7 to increase the concentration of dissolved oxygen in the aquaculture water. Further, the aquaculture water is transferred to the UV sterilizer 8 and sterilized with UV, after which the thus sterilized aquaculture water is returned back to the aquaculture pond 1.

A preferred mode of the aquaculture water purification system is not restricted to the above-described example. Various modifications can be made to the aquaculture water purification system, and it is needless to say that the aquaculture water purification system may take other configuration that is not illustrated in the drawings.

3. Water Purification Method

A water purification method according to a third embodiment of the present invention is a water purification method which includes the denitrification step of removing nitric acid from water to be treated, and the denitrification step includes a step of sprinkling the water to be treated onto a base material carrying denitrifying bacteria, and a step of draining the water to be treated such that at least a portion of the base material is constantly unexposed to the water to be treated.

The denitrification step can be performed by sprinkling an aquaculture water onto the base material of the above-described aquaculture water purification device, and draining the aquaculture water such that at least a portion of the base material is constantly unexposed to the aquaculture water by means of a water drainage mechanism.

4. Production Method for Aquatic Organism

A production method for aquatic organism according to a fourth embodiment of the present invention is a production method which includes the denitrification step of removing nitric acid from an aquaculture water by the water purification method according to the third embodiment of the present invention.

The production method according to the present embodiment may further include the nitrification step of converting ammonia contained in the aquaculture water into nitric acid. This nitrification step can be performed by allowing the aquaculture water to pass through the above-described biofiltration bed.

The aquatic organism may be any living organism that lives underwater, and typical examples thereof include: fishes, such as eel, salmon, trout, sweetfish, and char; and crustaceans, such as crabs and shrimps, among which eel is preferred.

EXAMPLES

The present invention will now be described in more detail by way of Examples thereof, however, it is needless to say that the scope of the present invention is not restricted to the modes described in the following Examples.

In Examples, an aquatic organism was cultured under the following conditions.

As aquaculture ponds, five aquaculture ponds to each of which 5 tons of aquaculture water and about 100 kg of eel can be added were prepared. To each of these aquaculture ponds, 5 tons of aquaculture water was added (total water amount: 25 tons). Subsequently, a total of 485 kg of eel (*Anguilla marmorata*) was added to the aquaculture ponds to start culturing. In this process, the eels were added such that the rearing density thereof is substantially the same in the respective aquaculture ponds. The culturing was started on June 14th.

(Example 1-1)

In this Example, the feed conversion rate in the summertime was examined in the case of using an aquaculture water purification system integrating a sprinkle-type aquaculture water purification device. The details thereof are described below.

On August 24th, using the sprinkle-type aquaculture water purification device illustrated in FIG. 2, purification of the aquaculture water by the aquaculture water purification system illustrated in FIG. 1 was started.

Specifically, from each opening surface of 13 holding parts in the form of rectangular boxes, 75 kg of PBSA pellets was added in equal amounts, and the holding parts were each installed to the sprinkle-type aquaculture water purification device having a capacity of 350 L. Next, the sprinkle-type aquaculture water purification device was attached to a water collection tank, and the aquaculture water was sprinkled onto the base material such that a flow rate of 180 to 290 L/HR was attained. The surface opposite to the opening surface of each holding part had a mesh structure, therefore, the aquaculture water passing through the base material was divided by the mesh structure and sprinkled onto the base material in the holding part on the downstream side. In this sprinkle-type aquaculture water purification device, during the water flow, the PBSA pellets were in contact with the atmosphere and thus placed in an aerobic environment.

Ordinary culturing was continued under the following conditions, and denitrifying bacteria were accumulated on the PBSA pellets. On September 24th, nitric acid was no longer detected from the aquaculture water passing through the sprinkle-type aquaculture water purification device, and it was thus confirmed that 100% of nitric acid contained in the aquaculture water had been decomposed. Further, it was confirmed that stable decomposition of nitric acid continued for one month thereafter, therefore, it was determined that the denitrifying bacteria were colonized on the PBSA pellets.

When the amount of the PBSA pellets was reduced due to passage through the mesh structure in association with the operation of the sprinkle-type aquaculture water purification device, new PBSA pellets were supplied as appropriate into each holding part such that the total weight of the PBSA pellets was maintained at 75 kg.

On October 24th, the eels were removed from all of the five aquaculture ponds, and their body weight was measured to determine the feed conversion rate. The eels cultured over a period of 132 days from June 14th, which is the culture starting day, to October 24th had a total weight of 664 kg and an increase of 179.4 kg in their body weight. The weight of the given feed in the same period was 362 kg. Accordingly, the feed conversion rate in this period (summertime) was calculated to be 2.02.

(Example 1-2)

In this Example, the feed conversion rate in the wintertime was examined in the case of using an aquaculture water purification system integrating a sprinkle-type aquaculture water purification device. The details thereof are described below.

After completing the above-described Example 1-1, the eels were returned back to the aquaculture bonds, and culturing thereof was further continued.

On January 12th, the eels were removed from all of the five aquaculture ponds, and their body weight was measured to determine the feed conversion rate. The eels cultured over a period of 79 days from October 24th to January 12th had a total weight of 807.1 kg and an increase of 142.7 kg in their body weight. The weight of the given feed in the same period was 226.9 kg. Accordingly, the feed conversion rate in this period (wintertime) was calculated to be 1.59.

(Example 1-3)

In the aquaculture water purification system used in the above-described Examples 1-1 and 1-2, over a period of 139 days from August 25th to January 10th, the nitrate nitrogen concentration of the aquaculture water was measured once every day before the purification and after the passage through the sprinkle-type aquaculture water purification device. Using the following equation, the amount of removed nitrate nitrogen per 1 kg of PBSA was calculated to be 4 to 19 g/kg/day. It is noted here that the weight of PBSA was set at 75 kg.

the amount of removed nitrate nitrogen per 1 kg of PBSA [g/kg/Day]

$$= \frac{\text{the nitrate nitrogen concentration of the aquaculture water before the passage through the water purification device [g/L]} - \text{the nitrate nitrogen concentration of the aquaculture water discharged from the water purification device [g/L]}}{\text{weight of PBSA [kg]}}$$

$\times$ amount of the aquaculture water passed through [L]

(Discussion Regarding Examples)

As described above, the feed conversion rate of eel is usually 1.8 to 2.0, and this is generally lower in the wintertime than in the summertime. In contrast, according to the results of Examples 1-1 and 1-2, it was found that the feed conversion rate, which is deteriorated in the wintertime under normal circumstances, was improved by about 20% with the use of the sprinkle-type aquaculture water purification device according to the first embodiment of the present invention. By this improvement in the feed conversion rate, the feed cost is expected to be reduced by about 20%.

(Comparative Example 1)

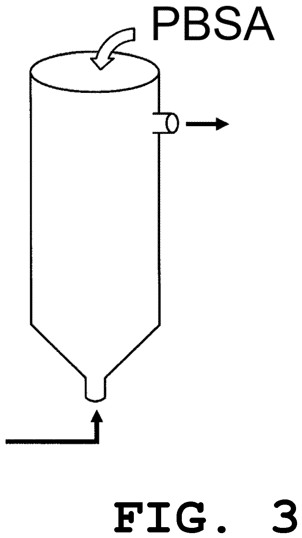

In the same period as in Examples, i.e., starting on June 14th, purification of an aquaculture water by the aquaculture water purification system illustrated in FIG. 1 was started using the sedimentation-type aquaculture water purification device illustrated in FIG. 3.

First, 75 kg of PBSA pellets was added to the sedimentation-type aquaculture water purification device having a capacity of 350 L. Subsequently, the aquaculture water was injected into the device from a lower part such that a flow rate of 180 to 290 L/hr was attained, and treated water was discharged from an upper part. In this sedimentation-type aquaculture water purification device, during the water flow, the PBSA pellets were completely immersed in the aquaculture water and thus placed in an anaerobic environment.

During a period from August 24th when the test was started to September 24th when removal of nitric acid from the aquaculture water was confirmed in Example 1, the nitric acid removing performance of the sedimentation-type aquaculture water purification device was not stable, fluctuating in a decomposition capacity range of 0% to 38%.

Further, over a period of 139 days from August 25th to January 10th, the nitrate nitrogen concentration of the aquaculture water was measured once every day before the purification and after the passage through the sedimentation-type aquaculture water purification device. As a result of calculating the amount of removed nitrate nitrogen per 1 kg of PBSA in the same manner as in Example 1-3, the amount of removed nitrate nitrogen was found to be 0 to 4 g/kg/day.

REFERENCE SIGNS LIST

1:    aquaculture pond
2:    physical filtration device
3:    first water collection tank
4:    biofiltration bed
5:    aquaculture water purification device
6:    second water collection tank
7:    oxygen cone
8:    UV sterilizer
11:   holding part
12:   mesh structure
13:   guide rail

**Claims**

1. A water purification device, comprising
   at least one base material carrying denitrifying bacteria;
   a holding part which holds the base material;
   a water sprinkling mechanism which sprinkles water to be treated onto the base material; and
   a water drainage mechanism which is arranged on the holding part and drains the water to be treated such that at least a portion of the base material is constantly unexposed to the water to be treated.

2. The water purification device according to claim 1, wherein the water to be treated is an aquaculture water.

3. The water purification device according to claim 1 or 2, wherein the water drainage mechanism is a mechanism which drains the water to be treated without allowing the water to be retained.

4. The water purification device according to any one of claims 1 to 3, wherein the base material comprises a biodegradable plastic.

5. The water purification device according to claim 4, wherein the biodegradable plastic comprises a dicarboxylic acid-derived constituent unit.

6. The water purification device according to claim 5, wherein the biodegradable plastic comprises two or more kinds of dicarboxylic acid-derived constituent units.

7. The water purification device according to any one of claims 4 to 6, wherein
   the base material is a three-dimensional mesh-form article in which thermoplastic resin-containing wires are not only bent and intertwined but also combined by being fused together at their points of contact, and
   the wires comprise the biodegradable plastic.

8. The water purification device according to any one of claims 1 to 7, wherein the holding part includes a hole which allows the water to be treated that has been sprinkled onto the base material to be discharged from the holding part.

9. The water purification device according to any one of claims 1 to 8, wherein the water purification device is detachably equipped with the holding part.

10. The water purification device according to claim 9, wherein the water purification device has a plurality of the holding part.

11. The water purification device according to any one of claims 1 to 10, wherein the holding part holds the base material by a mesh structure.

12. An aquaculture water purification system which purifies an aquaculture water extracted from an aquaculture pond in which an aquatic organism is cultured, and supplies the thus purified aquaculture water back to the aquaculture pond,
    wherein the aquaculture water purification system comprises
    a biofiltration bed which converts ammonia contained in the aquaculture water extracted from the aquaculture pond into nitric acid; and
    the water purification device according to any one of claims 1 to 11 which removes nitric acid from the aquaculture water discharged from the biofiltration bed.

13. A water purification method, comprising a denitrification step of removing nitric acid from water to be treated, wherein the denitrification step comprises a step of sprinkling water to be treated onto a base material carrying denitrifying bacteria, and a step of draining the water to be treated such that at least a portion of the base material is constantly unexposed to the water to be treated.

14. The water purification method according to claim 13, wherein the base material comprises a biodegradable plastic comprising two or more kinds of dicarboxylic acid-derived constituent units.

15. A production method for aquatic organism using the water purification method according to claim 13 or 14, wherein the water to be treated is an aquaculture water of an aquatic organism.

16. The production method for aquatic organism according to claim 15, wherein the aquatic organism is eel.

```
┌──────────────┐   ┌──────────────┐   ┌──────────────┐   ┌──────────────┐
│ 1: aquaculture│→ │ 2: physical  │→ │ 3: first water│→ │ 4: biofiltration│
│    pond       │   │ filtration device│ │ collection tank│ │    bed       │
└──────────────┘   └──────────────┘   └──────────────┘   └──────────────┘

┌──────────────┐   ┌──────────────┐   ┌──────────────┐   ┌──────────────────┐
│ 8: UV        │← │ 7: oxygen    │← │ 6: second water│← │ 5: aquaculture water│
│ sterilizer   │   │ cone         │   │ collection tank│ │ purification device │
└──────────────┘   └──────────────┘   └──────────────┘   └──────────────────┘
```

# FIG. 1

## FIG. 2

PBSA

FIG. 3

## INTERNATIONAL SEARCH REPORT

| | International application No. |
|---|---|
| | PCT/JP2019/025878 |

**A. CLASSIFICATION OF SUBJECT MATTER**
Int.Cl. A01K63/04(2006.01)i, A01K61/10(2017.01)i, C02F3/04(2006.01)i
According to International Patent Classification (IPC) or to both national classification and IPC

**B. FIELDS SEARCHED**

Minimum documentation searched (classification system followed by classification symbols)
Int.Cl. A01K61/00-61/65, A01K61/80-63/10, C02F3/00-C02F3/34

Documentation searched other than minimum documentation to the extent that such documents are included in the fields searched
Published examined utility model applications of Japan     1922-1996
Published unexamined utility model applications of Japan     1971-2019
Registered utility model specifications of Japan     1996-2019
Published registered utility model applications of Japan     1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-542 A (NPO JISEDAI MIZUMAWARI KENKYUKAI) 05 January 2012, paragraphs [0025]-[0039], fig. 1 | 1-3, 8-13, 15-16 |
| Y | (Family: none) | 4-12, 14-16 |
| Y | JP 2002-346594 A (TAIHO INDUSTRIES CO., LTD.) 03 December 2002, paragraphs [0001]-[0002], [0010] (Family: none) | 4-12, 14-16 |
| Y | JP 2004-175848 A (TAIHO INDUSTRIES CO., LTD.) 24 June 2004, paragraphs [0006], [0011] (Family: none) | 1-4-12, 14-16 |

☒ Further documents are listed in the continuation of Box C.     ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 September 2019 (02.09.2019) | 10 September 2019 (10.09.2019) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
|---|
| PCT/JP2019/025878 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2017/110296 A1 (TOKYO UNIVERSITY OF MARINE SCIENCE AND TECHNOLOGY) 29 June 2017, entire text, all drawings & US 2019/0014754 A1, entire text, all drawings & CN 108430216 A | 1-16 |
| A | WO 2017/073304 A1 (KANEKA CORP.) 04 May 2017, entire text, all drawings & US 2018/0305233 A1, entire text, all drawings & EP 3369713 A1 | 1-16 |
| A | JP 2013-63036 A (CLION CO., LTD.) 11 April 2013, entire text, all drawings (Family: none) | 1-16 |
| A | US 6025152 A (HIATT, William N.) 15 February 2000, entire text, all drawings (Family: none) | 1-16 |

Form PCT/ISA/210 (continuation of second sheet) (January 2015)

**EP 3 815 525 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1085782 B
- JP 2014024000 A
- JP 2010088307 A
- JP 2006149221 A